# EUROPÄISCHE PATENTSCHRIFT

(11) **EP 1 359 275 B1**
(45) Veröffentlichungstag und Bekanntmachung des Hinweises auf die Patenterteilung: **22.08.2012**
(21) Anmeldenummer: 03009579.8
(22) Anmeldetag: 29.04.2003
(51) Int. Cl.: F16F 9/02, F16F 9/36, E05F 5/00

(54) **Gelenk mit Vorrichtung zum Dämpfen von Schwenkbewegungen**
Hinge with device for damping of rotary movement
Charnière avec dispositif pour amortir des mouvements rotatifs

(30) Priorität: 30.04.2002 DE 10219172
(43) Veröffentlichungstag der Anmeldung: 05.11.2003
(73) Patentinhaber: Zimmer, Günther Stephan, 77866 Rheinau (DE); Zimmer, Martin Johannes, 77866 Rheinau (DE)
(72) Erfinder: Zimmer, Herbert, 77866 Rheinau (DE)
(74) Vertreter: Thämer, Wolfgang

(56) Entgegenhaltungen:
- AT-U1- 4 486
- DE-U1- 20 107 426
- DE-U1- 29 910 626
- GB-A- 1 439 911
- JP-A- 2000 180 993

## Beschreibung

Die Erfindung betrifft ein Gelenk zur Verbindung zweier Möbelstückteile mit einer Vorrichtung zum Dämpfen der Schwenkbewegung in einem durch zwei Endlagen begrenzten Schwenkbereich eines relativ zu einem ortsfesten Möbelstückteil schwenkbar gelagerten Möbelstückteils mittels eines Dämpfungselementes, wobei das Dämpfungselement in einem an eine Endlage angrenzenden Teilschwenkbereich aktiviert ist, wobei das Dämpfungselement eine Zylinder-Kolbeneinheit umfasst, die direkt oder indirekt an einem der beiden gegeneinander verschwenkten Möbelstückteile angeordnet ist und wobei bei aktivierter Dämpfung innerhalb der Zylinder-Kolbeneinheit ein Kolben hydraulisches Fluid oder ein Gas gedrosselt verdrängt, wobei das Gelenk sowohl ein Betätigungselement als auch eine Zylinder-Kolbeneinheit umfasst, wobei an dem die Zylinder-Kolbeneinheit nicht tragenden Möbelstückteil mindestens ein Betätigungselement angeordnet ist, das bei aktivierter Dämpfung mit einem dämpferseitigen Getriebeglied und mit einer Zylinder-Kolbeneinheit ein Schiebekeilgetriebe bildend gekoppelt ist.

Schwenkbar gelagerte Möbelstückteile sind z.B. Verschlussklappen, Türen, etc., eines Möbelstücks. Das ortsfeste Möbelstückteil ist dann beispielsweise der Körper des Möbelstücks. Der Schwenkbereich wird dann z.B. begrenzt durch eine offene und eine geschlossene Endlage der Verschlussklappe. Die beiden Möbelstückteile können ggf. miteinander z.B. über ein Schwenkgelenk verbunden sein. Das Schwenkgelenk kann beispielsweise ein Topfscharnier, ein Bandscharnier etc. sein. Der Schwenkbereich, in dem das Dämpfungselement aktiviert ist, grenzt entweder an die geschlossene oder die offene Endlage des schwenkbar gelagerten Möbelstückteils an. Bei aktiviertem Dämpfungselement wird die Schwenkbewegung der Möbelstückteile relativ zueinander verzögert.

Aus der DE 299 10 626 U1 und aus der DE 201 07 426 U1 ist jeweils eine Vorrichtung zum Dämpfen einer Schwenkbewegung bekannt. Diese ist in der Decke eines Möbelstückes angeordnet. Bei der Betätigung wirken Querkräfte auf den Kolben und die Kolbenstange und können ein Verkanten, ein Blockieren oder Leckagen der Zylinder-Kolbeneinheit verursachen.

In der JP 2000 180 993 A wird die nach oben öffenbaren Abdeckklappe eines Kopierers mittels eines Gelenks mit horizontaler Gelenkachse in der geöffneten Stellung gehalten. Hierfür stützt sich eine geschmierte Rolle ständig auf einem Keil ab, wobei der Keil mittels einer Rückstellfeder in die äußere Endlage gedrückt wird. Erst vor dem Erreichen einer geschlossenen Endlage wird zusätzlich ein Dämpfer aktiviert.

Die GB 1 439 911 A offenbart ein Schnappscharnier. Mit diesem Scharnier wird eine geschlossene Scharnierposition verrastet. Diese Druckschrift bietet kene Anregung, die Schließbewegung zu beeinflussen oder Schließgeräusche zu vermeiden.

Der vorliegenden Erfindung liegt die Problemstellung zugrunde, eine Vorrichtung zu entwickeln, die ein geräuscharmes Erreichen der Endlage der Schwenkbewegung ermöglicht und sowohl im Bereich des Schwenkgelenks integriert als auch an diese nachrüstbar sein kann.

Diese Problemstellung wird mit den Merkmalen des Hauptanspruches gelöst. Dazu umfasst die Zylinder-Kolbeneinheit das dämpferseitige Getriebeglied. Das dämpferseitige Getriebeglied ist von einer Kolbenstange der Zylinder-Kolbeneinheit getragen. Außerdem ist das dämpferseitige Getriebeglied Teil einer Kolbenstange der Zylinder-Kolbeneinheit oder die Kolbenstange ist in das dämpferseitige Getriebeglied eingesetzt und gesichert.

Die Schwenkbewegung des beweglichen Möbelstückteils wird mittels des Getriebes in eine translatorische Bewegung innerhalb der Zylinder-Kolben-Einheit umgewandelt. Der Kolben und der Zylinder bewegen sich relativ zueinander. Hierbei wird hydraulisches Fluid oder ein Gas aus einem Verdrängungsraum innerhalb des Zylinders gedrosselt verdrängt. Die Drosselung bewirkt eine Verzögerung der Schwenkbewegung und verhindert einen Rückprall beim Erreichen der Endlage der Schwenkbewegung. Die Endlage der Schwenkbewegung wird geräuscharm erreicht.

Die Zylinder-Kolbeneinheit kann hierbei unmittelbar an dem sie tragenden Möbelstückteil oder beispielsweise an einem Adapterteil befestigt sein, das mit dem tragenden Möbelstückteil verbunden ist. Hierbei kann entweder der Zylinder oder eine Kolbenstange der Zylinder-Kolbeneinheit mit dem tragenden Möbelstückteil verbunden sein.

Ist das Möbelstückteil, das die Zylinder-Kolbeneinheit trägt, das schwenkbar gelagerte Möbelstückteil, ist am ortsfesten Möbelstückteil ein Betätigungselement angeordnet, dass das Dämpfungselement aktiviert. Ist die Zylinder-Kolbeneinheit jedoch mit dem ortsfesten Möbelstückteil verbunden, ist das Betätigungselement am schwenkbar gelagerten Möbelstückteil angeordnet.

Die z.B. einfachwirkende Zylinder-Kolbeneinheit und das Betätigungselement sind bei aktivierter Dämpfung als Getriebe gekoppelt. Dies kann z.B. ein Gleitkeilgetriebe, ein Schubkurbelgetriebe etc. sein.

Die Zylinder-Kolbeneinheit kann eine feste oder einstellbare Dämpfungskennlinie haben. Diese kann z.B. linear, logarithmisch, progressiv, etc. sein.

Die Zylinder-Kolbeneinheit kann mit hydraulischem Fluid ganz oder teilweise befüllt sein. Sie kann einen innen- oder außenliegenden Ausgleichsraum aufweisen. Sie kann aber auch mit einem Gas, z.B. Luft, Stickstoff, etc. betrieben werden. Auch Kombinationen dieser Medien sind denkbar.

Weitere Einzelheiten der Erfindung ergeben sich aus den Unteransprüchen und der nachfolgenden Beschreibung einer schematisch dargestellten Ausführungsform.
- Figur 1:: Teilansicht eines Möbelstücks mit geöffneter Verschlussklappe;
- Figur 2:: Topfgelenk;
- Figur 3:: Gehäuse einer Dämpfungsvorrichtung;
- Figur 4:: Zylinder-Kolbeneinheit;
- Figur 5:: Drosselring;
- Figur 6:: Topfscharnier mit Dämpfungsvorrichtung, gestreckt;
- Figur 7:: Figur 6, abgewinkelt;
- Figur 8:: Schnitt durch Figur 6;
- Figur 9:: Figur 8, um 75° abgewinkelt;
- Figur 10:: Schnitt durch Figur 7;
- Figur 11:: Kolbenstangendruckstück.

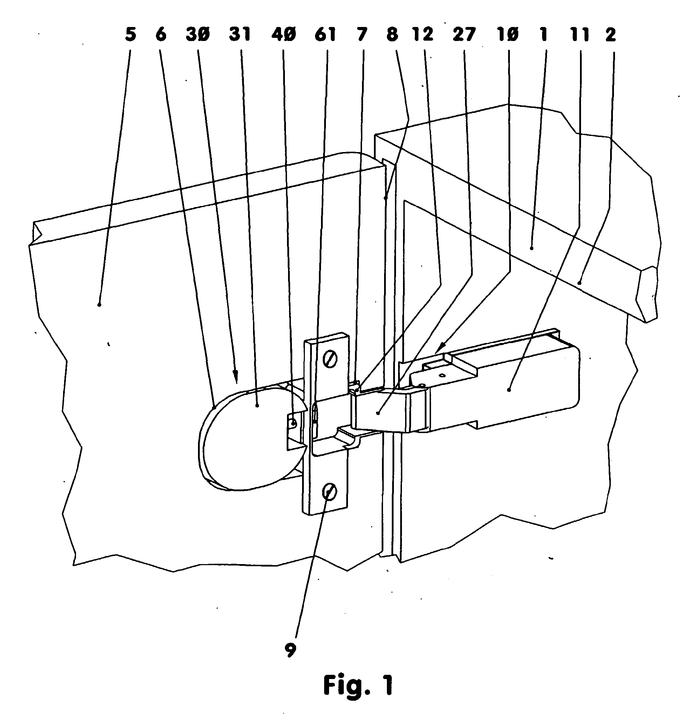

Die Figur 1 zeigt eine Vorrichtung zum Dämpfen der Schwenkbewegung eines relativ zu einem ortsfesten Möbelstückteil (1) schwenkbar gelagerten Möbelstückteils (5). Das ortsfeste Möbelstückteil (1) ist hierbei beispielsweise der Körper (1) eines Möbelstücks. Das schwenkbar gelagerte Möbelstückteil (5) ist z.B. eine Verschlussklappe (5), die beispielsweise mittels zweier Topfscharniere (10) zum seitlichen Aufschwenken am Körper (1) befestigt ist. Der Schwenkbereich der Verschlussklappe (5) wird z.B. durch eine geöffnete und eine geschlossene Endlage begrenzt. An der Verschlussklappe (5) ist im Ausführungsbeispiel ein Dämpfungselement (30) angeordnet. Dieses umfasst eine Zylinder-Kolbeneinheit (40).

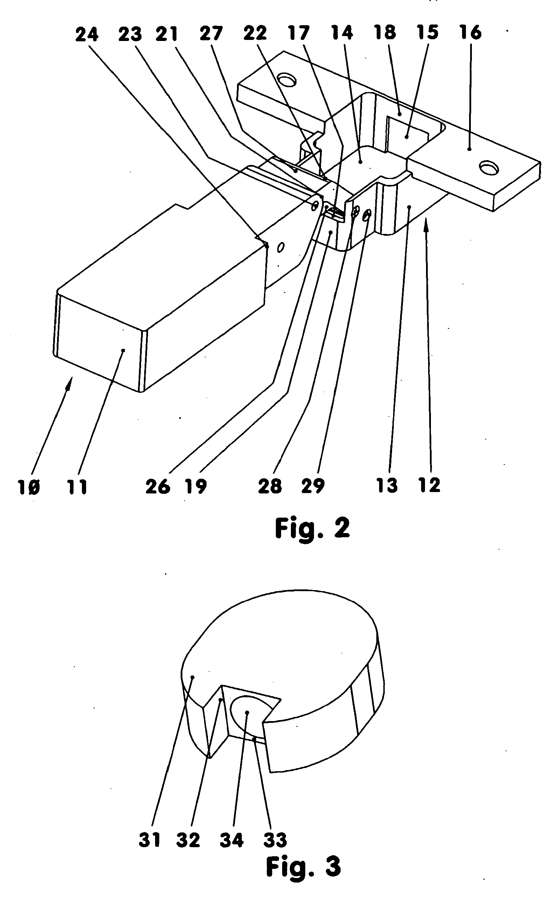

Die Figur 2 zeigt ein z.B. federbelastetes Topfscharnier (10). Es umfasst einen Montagearm (11), einen Gelenktopf (12), Gelenkhebel (26, 27) sowie eine hier nicht dargestellte Biegefeder.

Der Montagearm (11) ist z.B. ein bereichsweise hohler, quaderförmiger Arm, mit dem das Topfscharnier (10) im Körper (1) des Möbelstücks ausgerichtet und befestigt wird, vgl. Figur 1. In der zum Gelenktopf (12) zeigenden Bereich des Montagearms (11) sind zwei Bolzen (23, 24) befestigt, in denen ein äußerer Gelenkhebel (27) und ein innerer Gelenkhebel (26) gelagert sind. Der Bolzen (23) des äußeren Gelenkhebels (27) ist hierbei in Richtung des Gelenktopfes (12) und des Innenraumes des Körpers (1) versetzt zu dem Bolzen (24) des inneren Gelenkhebels (26). Die Gelenkhebel (26, 27) verbinden den Montagearm (11) mit dem Gelenktopf (12).

Der Gelenktopf (12) hat im Ausführungsbeispiel einen annähernd rechteckigen Rahmen (13), dessen Länge in Längsrichtung des Topfscharniers (10) größer ist als seine Breite. Ein plattenartiges Bodenteil (14) verschließt die Unterseite des Rahmens (13). Die beiden quer zur Längsrichtung orientierten Seiten (18, 19) des Rahmens (13) haben rechteckige Aussparungen (15, 17). Hierbei dient die montagearmseitige Aussparung (17) als Bewegungsraum der Gelenkarme (26, 27). Die Aussparung (15) in der Seitenwand (18) ist annähernd quadratisch und bündig mit dem Bodenteil (14). Der Rahmen (13) trägt an seiner Oberseite z.B. einen Befestigungsflansch (16) mit Bohrungen. Nahe der montagearmseitigen Rahmenseite (19) sind im Rahmen (13) die Gelenkhebel (26, 27) in Bolzen (28, 29) versetzt zueinander gelenkig gelagert. Der Gelenkbolzen (28) des äußeren Gelenkhebels (27) liegt in der Nähe der Oberseite des Rahmens (13) an der Aussparung (17). Der Gelenkbolzen (29) des inneren Gelenks (26) ist hierzu in Richtung der Rahmenseite (18) und in Richtung des Bodenteils (14) versetzt.

Die Figur 3 zeigt ein Gehäuse (31) des Dämpfungselements (30). Dies ist beispielsweise ein Kunststoffkörper mit ovaler Grundfläche, dessen Höhe z.B. einem Viertel seiner Länge entspricht. In der Längsachse hat das Gehäuse (31) eine vertikal ausgerichtete Nut (32). Die Breite dieser Nut (32) beträgt z.B. etwa ein Drittel der Breite des Gehäuses (31), ihre Tiefe im Ausführungsbeispiel etwa 20% der Länge des Gehäuses (31). Im Nutgrund (33) ist eine Sacklochbohrung (34) eingebracht, deren Durchmesser hier etwa 28% der Breite des Gehäuses (31) und deren Länge etwa 70% der Länge des Gehäuses (31) entspricht.

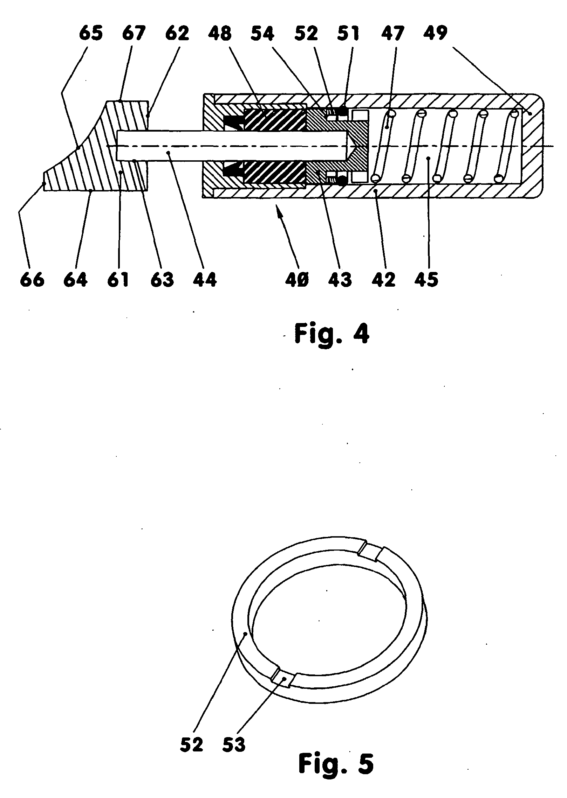

Die Zylinder-Kolbeneinheit (40), vgl. Figur 4, umfasst einen Zylinder (42) und einen darin mittels einer einseitigen Kolbenstange (44) geführten Kolben (43). Der Innendurchmesser des Zylinders (42) ist etwa das Dreifache des Durchmessers der Kolbenstange (44). Der maximale Kolbenhub beträgt etwa das Eindreiviertelfache des Innendurchmessers des Zylinders (42) und etwa 45% der Länge des Zylinders (42). Ein weiteres Ausfahren des Kolbens (43) verhindert ein z.B. elastisches Anschlagstück (48). Das Anschlagstück (48) kann z.B. aus porösem, ggf. offenzelligem Werkstoff bestehen.

Der Kolben (43) begrenzt innerhalb des Zylinders (42) mit dem Zylinderboden (49) einen Verdrängungsraum (45). In diesem Verdrängungsraum (45) stützt sich der Kolben (43) z.B. über eine Druckfeder (47) am Zylinderboden (49) ab. Der Kolben (43) umfasst ein Dichtelement (51), z.B. einen auf dem Kolben (43) sitzenden O-Ring (51). Das Dichtelement (51) kontaktiert die Innenwandung des Zylinders (42).

In Reihe mit dem Dichtelement (51) ist ein z.B. elastischer Drosselring (52) auf dem Kolben (43) an einer Kolbenanschlagfläche (54) angeordnet. Dieser Drosselring (52), vgl. Figur 5, trägt an seiner Stirnseite zwei einander gegenüberliegende Drosselnuten (53). Die Breite dieser Drosselnuten (53) beträgt z.B. etwa ein Zwanzigstel des Außendurchmessers des Drosselrings (52), ihre Tiefe etwa ein Vierzigstel dieses Durchmessers. Der Außendurchmesser des Drosselrings (52) ist geringfügig kleiner als der Innendurchmesser des Zylinders (42). Sein Innendurchmesser ist beispielsweise um 10% größer als der Außendurchmesser des Kolbens (43) in diesem Bereich. Im eingebauten Zustand liegt der Drosselring (52) mit den Drosselnuten (53) an der Kolbenanschlagfläche (54) an.

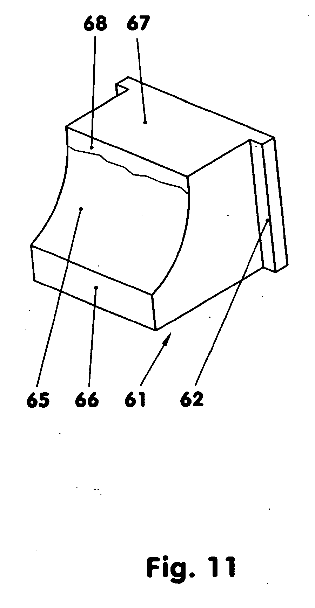

Das freie Ende der Kolbenstange (44) trägt ein Kolbenstangendruckstück (61), vgl. Figur 4. Dies ist beispielsweise ein annähernd prismenförmiger Kunststoffkörper, der in einem z.B. beidseitig überstehenden Anlageflansch (62) eine Kolbenstangenaufnahmebohrung (63) aufweist, vgl. die Figuren 4 und 11. An diesen Anlageflansch (62) schließt sich auf der Unterseite des Kolbenstangendruckstücks (61), vgl. Figur 4, eine normal hierzu ausgerichtete, z.B. weitgehend quadratische Gleitfläche (64) an. Dem Anlageflansch (62) gegenüber liegt eine Stirnfläche (66). Deren Höhe beträgt etwa ein Fünftel der Höhe des Kolbenstangendruckstücks (61). An die Stirnfläche (66) schließt eine konkave Schiebekeilfläche (65) an, die im Anschlussbereich mit der Stirnfläche (66) einen Winkel von z.B. etwa 150° einschließt. Die Oberseite (67) des Kolbenstangendruckstücks (61) ist parallel zur Gleitfläche (64), ihre Länge beträgt etwa 40% der Länge der Gleitfläche (64).

In der Verschlussklappe (5), vgl. Figur 1, sind nahe der Anschlagkante (8) zwei Ausfräsungen (6, 7) beispielsweise gleicher Tiefe angeordnet, die ineinander übergehen. Hierbei hat die von der Anschlagkante (8) entferntere Ausfräsung (6) zumindest weitgehend die Form und Fläche der Bodenfläche des Gehäuses (31) des Dämpfungselementes (30). Die Ausfräsung (7) hat die Kontur des Rahmens (13) des Gelenktopfes (12).

Zur Montage der Verschlussklappe (5) werden an dieser z.B. die Topfscharniere (10) mit der Oberkante des Rahmens (13) bündig in die Ausfräsungen (7) eingesetzt und verschraubt. Ggf. ist der Rahmen (13) an seinem oberen Ende umgebördelt bzw. flanschartig verbreitert und liegt im Bereich um die Ausfräsung (7) auf. Danach wird die Verschlussklappe (5) zusammen mit den Topfscharnieren (10) in den Körper (1) des Möbelstücks eingesetzt. Nach dem Ausrichten der Verschlussklappe (5) mittels der Topfscharniere (10) werden diese am Körper (1) befestigt. In diesem ersten Montageschritt bleibt die Ausfräsung (6) beispielsweise ohne Einsatzteil.

Zur Vormontage des Dämpfungselementes (30) wird z.B. das Kolbenstangendruckstück (61) in die Aussparung (15) eingesetzt, so dass der Anlageflansch (62) außen an der Rahmenseite (18) anliegt. Der Zylinder (42) der Zylinder-Kolbeneinheit (40) wird in die Aufnahmebohrung (34) des Gehäuses (31) eingesetzt und ggf. in dieser z.B. durch Verkleben gesichert. Die Zylinder-Kolbeneinheit (40) kann auch in das Gehäuse (31) integriert sein. Dann entfällt dieser Montageschritt. Die Kolbenstange (44) wird eingeschoben und das Gehäuse (31) mit der Zylinder-Kolbeneinheit (40) z.B. bündig in die Ausfräsung (6) der Verschlussklappe (5) eingesetzt und ggf. z.B. durch Verkleben gesichert. Dann wird die Kolbenstange (44) in die Kolbenstangenaufnahmebohrung (63) eingesteckt und beispielsweise durch Verkleben gesichert.

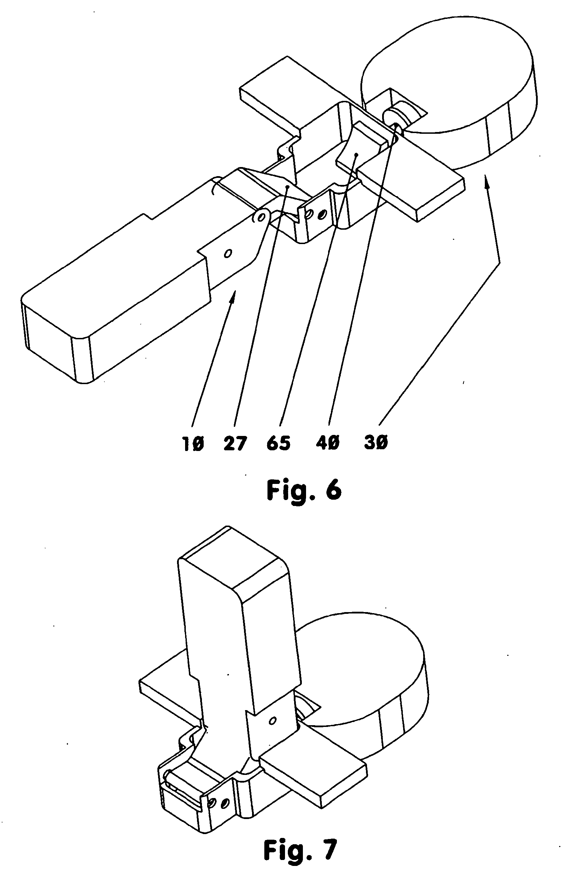

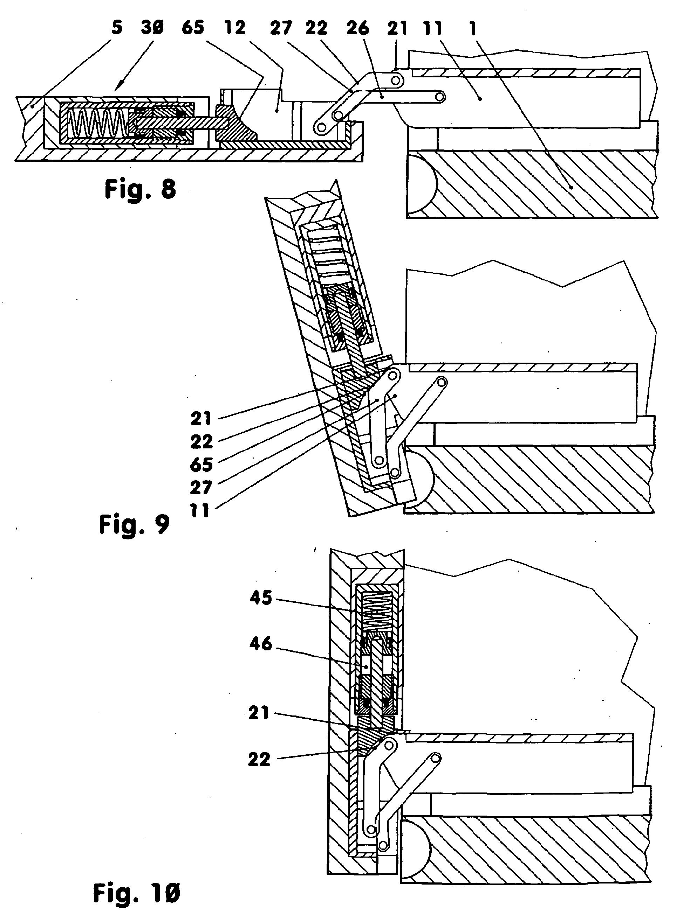

Das Kolbenstangendruckstück (61) ragt nun mit beispielsweise 80% seiner Länge in den Gelenktopf (12) hinein, vgl. die Figuren 6 und 8. Das Dämpfungselement (30) liegt nun in der Schwenkebene des Topfscharniers (10). Das Kolbenstangendruckstück (61) liegt z.B. jetzt mit der Gleitfläche (64) auf der Bodenfläche (14) des Gelenktopfes (12) auf. Die Schiebekeilfläche (65) liegt frei zugänglich im Gelenktopf (12). In der Zylinder-Kolbeneinheit (40) ist die Druckfeder (47) entspannt.

Im Ausgangszustand steht die Verschlussklappe (5) beispielsweise in der geöffneten Stellung, vgl. Figur 1. Sie schließt mit der Vorderkante (2) des Körpers (1) beispielsweise einen Winkel von 110° ein. Das einzelne Topfscharnier (10) steht z.B. überstreckt in einer geöffneten Endlage.

Wird die Verschlussklappe (5) geschlossen, schwenken die Gelenkhebel (26, 27) um die Bolzen (23, 24) und die Verschlussklappe (5) mit dem Gelenktopf (12) um die Gelenkbolzen (28, 29). Die Verschlussklappe (5) beschreibt so eine zwangsgeführte Schwenkbewegung von der offenen Endlage in Richtung einer geschlossenen Endlage. Beispielsweise 15° vor Erreichen der geschlossenen Endlage, vgl. Figur 9, berührt der äußere Gelenkhebel (27) mit einer Kontaktzone (22) die Schiebekeilfläche (65) des Kolbenstangendruckstücks (61). Beim weiteren Schließen der Verschlussklappe (5), ggf. unterstützt durch die Biegefeder des Topfgelenks (10), schiebt der äußere Gelenkhebel (27) das Kolbenstangendrückstück (61) und damit die Kolbenstange (44) aus dem Gelenktopf (12) nach außen. Der äußere Gelenkhebel (27) ist hierbei das Betätigungselement für das Dämpfungselement (30) und bildet mit der Schiebekeilfläche (65) der Kolbenstange (44) ein Schiebekeilgetriebe (27, 65). Im Schiebekeilgetriebe (27, 65) bildet das Kolbenstangendruckstück (61) das dämpferseitige Getriebeglied (61). Der Kolben (43) der Zylinder-Kolbeneinheit (40) wird in Richtung des Verdrängungsraumes (45) verschoben und verdrängt hierbei hydraulisches Fluid gedrosselt durch die Drosselnuten (53) in einen Ausgleichsraum (46), vgl. Figur 10. Hierdurch wird die Schließbewegung der Verschlussklappe (5) verzögert. Der Gelenkhebel (27) gleitet nun unter weiterem Verschieben des Kolbenstangendrückstücks (61) an dessen Schiebekeilfläche (65) ab. Das Kolbenstangendruckstück (61) gleitet mit seiner Gleitfläche (64) auf der Bodenfläche (14) des Gelenktopfes (12) und versetzt den Kolben (43) weiter in Richtung des Verdrängungsraumes (45). Kurz vor Erreichen der geschlossenen Endlage kontaktiert beispielsweise der Montagearm (11) als Betätigungselement mit einer Kontaktzone (21) die Schiebekeilfläche (65) und verschiebt das Kolbenstangendruckstück (61) in Richtung der Zylinder-Kolbeneinheit (40). Die Schließbewegung wird weiter verzögert, bis die Geschwindigkeit der Verschlussklappe (5) bei Erreichen der geschlossenen Endlage nahe Null ist. Die Verzögerung nimmt mit zunehmendem entlang gleiten der Getriebepartner (11, 27, 61) ab, so dass die Verschlussklappe (5) in der Endlage prallfrei stehen bleibt. Im Ausgleichraum (46) nimmt beispielsweise das poröse und offenzellige Anschlagstück (48) einen Teil des verdrängten hydraulischen Fluids oder Gases auf.

Zum Öffnen wird die Verschlussklappe (5) bis in die offene Endlage aufgezogen. Hierbei gleitet der Montagearm (11) und der äußere Gelenkhebel (27) entlang der Schiebekeilfläche (65) in Richtung der Oberseite (67) des Kolbenstangendruckstücks (61). Die Druckfeder (47) in der Zylinder-Kolbeneinheit (40) schiebt hierbei den Kolben (43) in Richtung des Gelenktopfes (12). Das Kolbenstangendrückstück (61) wird dem äußeren Gelenkhebel (27) nachgeführt, bis dieser bei einem Schwenkwinkel von z.B. etwa 15° von der geschlossenen Endlage aus von der Schiebekeilfläche (65) abhebt, vgl. Figur 9. Der Kolben (43) der Zylinder-Kolbeneinheit (40) liegt nun z.B. am Anschlagstück (48) an. Das Kolbenstangendrückstück (61) liegt mit seinem Anschlagflansch (62) an der Rahmenseite (18) an und bleibt in dieser Endlage stehen, vgl. die Figuren 6, 8 und 11.

Im Ausführungsbeispiel umfasst die Vorrichtung zwei Betätigungselemente (11, 27) zur Betätigung des Dämpfungselements (30). Es ist aber auch denkbar, nur eines dieser Bauteile (11, 27) als Betätigungselement einzusetzen. Dieses umfasst dann die Kontaktzone (22), die z.B. beim Schließen als erstes die Schiebekeilfläche (65) berührt.

Die Dämpfungswirkung des Dämpfungselements (30) wird u.a. durch die Kontur der Schiebekeilfläche (65) bestimmt. Diese kann z.B. auch eine gerade, konvexe oder jede andere stetige Kontur aufweisen.

Die Gleitflächen (21, 22, 65, 14, 64) der Vorrichtung können z.B. mit Teflon beschichtet sein, um den Verschleiß der Gleitpartner zu vermindern.

Im Schiebekeilgetriebe (11, 27, 61) kann das Kolbenstangendruckstück (61) beispielsweise eine Rolle aufweisen, auf der das Betätigungselement z.B. abwälzt. Auch kann zwischen der Gleitfläche (64) und der Bodenfläche (14) z.B. eine Wälzrolle angeordnet sein, auf der das Kolbenstangendruckstück (61) abrollt. Das dämpferseitige Getriebeglied (61) kann Teil der Kolbenstange (44) der Zylinder-Kolbeneinheit (40) sein.

Das Dämpfungselement (30) kann auch Teil eines Topfscharniers (12) oder einer anderen Scharnierbauart sein. Es wird dann zusammen mit diesem in die beiden Möbelstückteile (1, 5) eingesetzt.

Im Ausführungsbeispiel verfügt das Topfscharnier (10) über eine Zuhaltevorrichtung in Form einer Biegefeder. Statt dessen kann auch z.B. ein Magnet, eine Zugfeder, oder eine andere Zuhaltevorrichtung zwischen den gegeneinander geschwenkten Möbelstückteilen (1, 5) angeordnet sein. Auch eine Ausführung ohne Zuhaltevorrichtung ist denkbar.

Im Kolben (43) der Zylinder-Kolbeneinheit (40) können beispielsweise ein oder mehrere Überdruckventile integriert sein. Diese öffnen beispielsweise bei einem zu festen Zuschlagen der Verschlussklappe (5) um z.B. ein Ausreißen des Topfscharniers (10) bei einer Verzögerung der Schwenkbewegung aufgrund des Massenträgheitsmoments der Verschlussklappe (5) zu verhindern.

Um ein unerwünschtes Öffnen der geschlossenen Verschlussklappe (5) zu verhindern, hat die Schiebekeilfläche (65) ggf. eine besondere Form. Dazu hat sie ausgehend von der Oberseite (67) eine Blockierzone (68), die zumindest weitgehend parallel zum Anlageflansch (62) ausgerichtet ist. In dieser Blockierzone (68) liegt bei geschlossener Verschlussklappe (5) der Montagearm (11) mit einem Bereich seiner Kontaktzone (21) annähernd plan an. Folglich kann die in der Zylinder-Kolbeneinheit (40) eingebaute Rückstellfeder (47), vgl. Figur 4, die Verschlussklappe (5) nicht aufdrücken.

### Bezugszeichenliste:

- 1: Möbelstückteil, Körper
- 2: Vorderkante
- 5: Möbelstückteil, Verschlussklappe
- 6: Ausfräsung
- 7: Ausfräsung
- 8: Anschlagkante
- 9: Schrauben

- 10: Gelenk, Topfscharnier
- 11: Betätigungselement; Montagearm
- 12: Gelenktopf
- 13: Rahmen
- 14: Bodenteil
- 15: Aussparung, Durchbruch
- 16: Befestigungsflansch
- 17: Aussparung
- 18: Rahmenseite
- 19: Rahmenseite

- 21: Kontaktzone
- 22: Kontaktzone
- 23: Bolzen
- 24: Bolzen

- 26: Gelenkhebel, innen
- 27: Betätigungselement; Gelenkhebel, außen
- 28: Bolzen
- 29: Bolzen

- 30: Dämpfungselement
- 31: Gehäuse
- 32: Nut
- 33: Nutgrund
- 34: Aufnahmebohrung

- 40: Zylinder-Kolbeneinheit
- 42: Zylinder
- 43: Kolben
- 44: Kolbenstange
- 45: Verdrängungsraum
- 46: Ausgleichsraum
- 47: Rückstellfeder, Druckfeder
- 48: Anschlagstück
- 49: Zylinderboden

- 51: Dichtelement, O-Ring
- 52: Drosselring
- 53: Drosselnuten
- 54: Kolbenanschlagfläche

- 61: Kolbenstangendruckstück; Getriebeglied, dämpferseitig
- 62: Anlageflansch
- 63: Kolbenstangenaufnahmebohrung
- 64: Gleitfläche
- 65: Schiebekeilfläche
- 66: Stirnfläche
- 67: Oberseite
- 68: Blockierzone

## Patentansprüche

1. Gelenk (10) zur Verbindung zweier Möbelstückteile (1, 5) mit einer Vorrichtung zum Dämpfen der Schwenkbewegung in einem durch zwei Endlagen begrenzten Schwenkbereich eines relativ zu einem ortsfesten Möbelstückteil schwenkbar gelagerten Möbelstückteils mittels eines Dämpfungselementes, wobei das Dämpfungselement in einem an eine Endlage angrenzenden Teilschwenkbereich aktiviert ist, wobei das Dämpfungselement eine Zylinder-Kolbeneinheit umfasst, die direkt oder indirekt an einem der beiden gegeneinander verschwenkten Möbelstückteile angeordnet ist und wobei bei aktivierter Dämpfung innerhalb der Zylinder-Kolbeneinheit ein Kolben hydraulisches Fluid oder ein Gas gedrosselt verdrängt, wobei das Gelenk (10) sowohl ein Betätigungselement (11, 27) als auch eine Zylinder-Kolbeneinheit (40) umfasst, wobei an dem die Zylinder-Kolbeneinheit (40) nicht tragenden Möbelstückteil (1, 5) mindestens ein Betätigungselement (11, 27) angeordnet ist, das bei aktivierter Dämpfung mit einem dämpferseitigen Getriebeglied (61) und mit einer Zylinder-Kolbeneinheit (40) ein Schiebekeilgetriebe (11, 27, 61) bildend gekoppelt ist, **dadurch gekennzeichnet,**
- **dass** die Zylinder-Kolbeneinheit (40) das dämpferseitige Getriebeglied (61) umfasst,
- **dass** das dämpferseitige Getriebeglied (61) von einer Kolbenstange (44) der Zylinder-Kolbeneinheit (40) getragen ist und
- **dass** das dämpferseitige Getriebeglied (61) Teil einer Kolbenstange (44) der Zylinder-Kolbeneinheit (40) ist oder wobei die Kolbenstange (44) in das dämpferseitige Getriebeglied (61) eingesetzt und gesichert ist.

2. Gelenk (10) nach Anspruch 1, **dadurch gekennzeichnet, dass** es ein Topfscharnier (10) ist.

3. Gelenk (10) nach Anspruch 2, **dadurch gekennzeichnet, dass** das Topfscharnier (10) einen Gelenktopf (12) mit einem in der Schwenkebene des Topfscharniers (10) liegenden Durchbruch (15) hat.

4. Gelenk (10) nach Anspruch 3, **dadurch gekennzeichnet, dass** das Dämpfungselement (30) in dem schwenkbar gelagerten Möbelstückteil (5) in der Schwenkebene des Topfgelenks (10) angeordnet ist, wobei das dämpferseitige Getriebeglied (61) durch den Durchbruch (15) in den Scharniertopf (12) ragt.

5. Gelenk (10) nach Anspruch 1, **dadurch gekennzeichnet, dass** die Zylinder-Kolbeneinheit (40) einfachwirkend ist und eine Federrückstellung aufweist.

6. Gelenk (10) nach Anspruch 3, **dadurch gekennzeichnet, dass** das Betätigungselement der äußere Gelenkhebel (27) des Topfscharniers (10) ist.

7. Gelenk (10) nach den Ansprüchen 1 und 4, **dadurch gekennzeichnet, dass** die Kolbenstange (44) und der Scharniertopf (12) einander zugewandte Gleitflächen (14, 64) aufweisen.

8. Gelenk (10) nach Anspruch 1, **dadurch gekennzeichnet, dass** das die Dämpfungsvorrichtung (30) eine hydraulische Dämpfungsvorrichtung ist.

9. Gelenk (10) nach Anspruch 1, **dadurch gekennzeichnet, dass** der Kolben (43) der Zylinder-Kolbeneinheit (40) mindestens ein Überdruckventil umfasst.

10. Gelenk (10) nach Anspruch 1, **dadurch gekennzeichnet, dass** das dämpferseitige Getriebeglied (61) eine Blockierfläche (68) umfasst, die im wesentlichen parallel zu einem Anlageflansch (62) ausgerichtet ist.

## Claims

1. A hinge (10) for connecting two parts (1, 5) of a piece of furniture, comprising damping means including a damping element for damping the pivoting movement of a furniture part mounted pivotally relative to a stationary furniture part, said pivoting movement occurring within a pivoting range and being limited by two end positions, said damping element activated in a part of said pivoting range which is located adjacent one of said end positions, the damping element comprising a piston-cylinder unit disposed directly or indirectly on one of said furniture parts pivoting relative to each other, the piston displacing within the piston-cylinder unit a hydraulic fluid or a gas, subject to choking, when the damping action is activated, and hinge (10) comprising both an actuating element (11, 27) and a piston-cylinder unit (40) with at least one actuating element (11, 27) mounted on the furniture part (1, 5) not supporting the piston-cylinder unit (40), said actuating element (11, 27) - when the damping action is activated - coupled with a damper-side link (61) and a piston-cylinder unit (40) to form a sliding-wedge-type linkage (11, 27, 61),
**characterized in that**
- piston-cylinder unit (40) comprises the damper-side link (61) of the linkage;
- damper-side link (61) is carried by a piston rod (44) of piston-cylinder unit (40); and
- damper-side link (61) forms part of a piston rod (44) of piston-cylinder unit (40), or piston rod (44) is inserted in, or secured to, damper-side link (61).

2. Hinge (10) as claimed in claim 1, **characterized by** comprising a concealed or cupboard hinge.

3. Hinge (10) as claimed in claim 2, **characterized in that** concealed hinge (10) has a hinge pot (12) with an aperture (15) lying in the pivoting plane of concealed hinge (10).

4. Hinge (10) as claimed in claim 3, **characterized in that** damping element (30) is disposed in pivotally mounted furniture part (5) in the pivoting plane of concealed hinge (10), the damper-side link (61) extending into hinge pot (12) through aperture (15).

5. Hinge (10) as claimed in claim 1, **characterized in that** piston-cylinder unit (40) is a single-acting unit and includes spring-action return means.

6. Hinge (10) as claimed in claim 3, **characterized in that** the actuating element comprises the outer hinge lever (27) of concealed hinge (10).

7. Hinge (10) as claimed in claims 1 and 4, **characterized in that** piston rod (44) and hinge pot (12) have mutually facing slide surfaces (14, 64) thereon.

8. Hinge (10) as claimed in claim 1, **characterized in that** damping means (30) comprises a hydraulic damping means.

9. Hinge (10) as claimed in claim 1, **characterized in that** piston (43) of piston-cylinder unit (40) comprises at least one overpressure valve.

10. Hinge (10) as claimed in claim 1, **characterized in that** damper-side link (61) comprises a blocking surface (68) oriented substantially parallel with an engagement flange (62).

## Revendications

1. Articulation (10) permettant de relier deux éléments de meuble (1,5), équipée d'un dispositif pour l'amortissement du mouvement de pivotement, à l'intérieur d'une zone de pivotement limitée par deux positions finales d'un élément de meuble monté de façon pivotante par rapport à un élément de meuble fixe, par l'intermédiaire d'un élément amortisseur, l'élément amortisseur étant activé dans une zone de pivotement partiel adjacente à une position finale, l'élément amortisseur comportant une unité cylindre-piston qui est placée directement ou indirectement sur un des deux éléments du meuble, repliés l'un contre l'autre, et un piston déplaçant un fluide hydraulique ou un gaz par un passage à étranglement à l'intérieur de l'unité cylindre-piston, l'articulation (10) comportant non seulement un élément d'actionnement (11, 27) mais aussi une unité cylindre-piston (40), au moins un élément d'actionnement (11, 27) étant monté sur l'élément de meuble (1, 5) non portant l'unité cylindre-piston (40) qui, lorsque l'amortissement est activé, est accouplé avec un élément d'engrenage (61) situé du côté de l'amortisseur et avec une unité cylindre-piston (40) qui forment un engrenage à clavette coulissante (11, 27, 61),
**caractérisée en ce**
- **que** l'unité cylindre-piston (40) comprend l'élément d'engrenage (61) situé du côté de l'amortisseur
- **que** l'élément d'engrenage (61) du côté de l'amortisseur est porté par une tige de piston (44) de l'unité cylindre-piston (40) et
- **que** l'élément d'engrenage (61) du côté amortisseur fait partie d'une tige de piston (44) de l'unité cylindre-piston (40) ou que la tige de piston (44) est installée et bloquée dans l'élément d'engrenage (61) du côté de l'amortisseur.

2. Articulation (10) selon la revendication 1, **caractérisée en ce que** la dite articulation est une charnière à boîtier (10).

3. Articulation (10) selon la revendication 2, **caractérisée en ce que** la charnière (10) a un boîtier (12) avec une ouverture (15) située dans le plan de pivotement de la charnière à boîtier (10).

4. Articulation (10) selon la revendication 3, **caractérisée en ce que** l'élément amortisseur (30) est placé dans le plan de pivotement de l'articulation (10) dans l'élément de meuble (5) qui est monté de façon pivotante, l'élément d'engrenage (61) du côté amortisseur traversant l'ouverture (15) et s'engageant dans le boîtier (12).

5. Articulation (10) selon la revendication 1, **caractérisée en ce que** l'unité cylindre-piston (40) est à action simple et présente un rappel par ressort.

6. Articulation (10) selon la revendication 3, **caractérisée en ce que** l'élément d'actionnement est le levier articulé extérieur (27) de la charnière à boîtier (10).

7. Articulation (10) selon les revendications 1 et 4, **caractérisée en ce que** la tige de piston (44) et le boîtier (12) présentent des surfaces de glissement (14, 64) orientées l'une vers l'autre.

8. Articulation (10) selon la revendication 1, **caractérisée en ce que** le dispositif amortisseur (30) est un dispositif amortisseur hydraulique.

9. Articulation (10) selon la revendication 1, **caractérisée en ce que** le piston (43) de l'unité cylindre-piston (40) comporte au moins une soupape de surpression.

10. Articulation (10) selon la revendication 1, **caractérisée en ce que** l'élément d'engrenage (61) qui se trouve du côté de l'amortisseur comporte une surface de blocage (68) orientée sensiblement parallèlement à une bride d'appui (62).
